# EUROPEAN PATENT APPLICATION

(11) **EP 4 572 138 A1**
(43) Date of publication of application: **18.06.2025**
(21) Application number: 24219749.9
(22) Date of filing: 13.12.2024
(51) Int. Cl.: H02S 50/00

(54) **SYSTEM AND METHOD FOR ASSIGNING TRACKER CONTROL UNIT (TCU) IDENTIFIERS IN A SOLAR TRACKER NETWORK**

(30) Priority: 14.12.2023 DK PA202370618
(71) Applicant: European Energy A/S, 2860 Søborg (DK)
(72) Inventor: GJERDING, Jens Bønnelycke, 2860 Søborg (DK); PEDERSEN, Mikael D., 2860 Søborg (DK); RIEDEL-LYNGSKÆR, Nicholas, 2860 Søborg (DK)
(74) Representative: Guardian IP Consulting I/S

(57) **Abstract**

The present invention relates to a method of a assigning tracker control unit identifier to each of a plurality of solar tracking control units (TCU; 110), each solar tracking control unit (TCU; 110) associated with a solar photovoltaic (PV) tracking structure (100) and configured to control a tilt thereof about one or more axes, the method comprising: providing (405) a first data set to a network control unit (NCU; 310), the network control unit (NCU; 310) configured to establish a communications network (300) with the plurality of solar tracking control units (TCU; 110), or at least a part thereof, the first data set comprising data representing a respective geographical location of a plurality of, e.g. each of, the plurality of solar tracking control units (TCU; 110), obtaining (406), by the network control unit (NCU; 310), a second data set comprising data representing a geographical location, from at least one, some, or all of the plurality of solar tracking control units (TCU; 110), and determining (407) whether a geographical location of the second data set matches, e.g. within a certain threshold or tolerance, a geographical location of the first data set, and if matching, assigning (407) a tracker control unit identifier to or for the solar tracking control unit (TCU; 110) that provided the matching geographical location of the second data set to the network control unit (NCU; 310).

## Description

### Field of the invention

The present invention relates generally to assigning tracker control unit (TCU) identifiers in a network of solar photovoltaic tracking structures.

### Background

The use of solar photovoltaic (PV) panels is ever increasing in order to supply electricity based on renewable energy sources. Such solar PV panels are often arranged in smaller or larger arrays, grids, layouts, etc., often also referred to as solar parks, solar farms, solar power plants, etc. A (solar) support structure assembly will typically support one or more solar PV panels on a suitable surface.

In order to meet an increasing demand for electricity based on renewable energy sources there is a tendency for at least some of such arrangements of solar PV panels to increase more and more in size and capacity. There is also an increased need for improvements of overall efficiency and bringing down costs (including installation and maintenance costs) of such arrangements.

One type of solar PV tracking structures is the co-called single axis trackers (SATs) that are a type of PV tracking structure that dynamically orient or rotate a PV array over the course of a day about a single axis (e.g. within rotation limits of ±60°, at least for some models/types). The dynamic orientation of a PV array may e.g. be from east to west, north-south, or south-north or as otherwise applicable. The SAT concept is well known and the motivation for its development and use is an about 10% to about 20% energy gain relative to static PV support structures, depending on the PV site's latitude and layout. While SATs are widely used (for non-stationary PV tracking structures) there also exist dual axis trackers. In the following, SATs are mainly referred to, but the description may also apply for dual axis trackers. A SAT tracking structure typically comprises or is associated with a so-called tracker control unit (TCU) responsible for - e.g. amongst others - dynamically adjusting the angle of incidence (AOI) with the goal of minimising the AOI between the Sun's direct beam component and the PV panels of the SAT tracking structure e.g. according to time, date, geographical location, and/or PV site layout. One TCU will typically be used for one or more SAT tracking structures, where a SAT tracking structure comprises one or more (typically a plurality of) PV panels.

The TCUs are typically connected in a network with a so-called network control unit (NCU) typically configured to do one or more of the following: collecting or providing data (such as current angular position of the PV panels, a target position, current (working) status, etc.) from each connected TCU, providing control of a connected TCU (e.g. changing/controlling settings or parameters), providing remote access to a connected TCU. Presently, an NCU may e.g. be connected to up to 1000 TCUs.

It is today not uncommon that a, for example, 50 MWp PV power plant comprises about 3000 TCUs but even larger scale power plants are envisaged.

In such large-scale PV arrangements/power plants it is significant to keep costs down and reduce the complexity as much as possible also in relation to maintenance, setup, and initialisation, and so on.

While capabilities of the TCUs could be increased and expanded it would add to the complexity and costs of the TCUs themselves.

As part of the installation, setup, and/or initialisation process for a PV power plant, each TCU (typically) needs to be assigned with a TCU identifier allowing the TCU to be referred to by this identifier e.g. as part of the management and operation of the PV power plant. For example, if a particular SAT or other tracking structure (with a particular TCU) needs service or maintenance, it is useful to have an unambiguous identifier (at least within a given context - i.e. the identifier need not necessarily be 'globally' unique) to refer to. Currently, it is common practice to set/program TCU identifiers by manually connecting each TCU via a serial/USB connection to a PC or the like where the operator uses a dedicated software application to configure the unique identifier of each TCU in a network. Whether this process is done in the field (i.e. after the TCU is attached to a SAT or other tracker) or pre-installation/pre-construction (i.e. before TCU deployment), the configuration/installation process requires careful oversight to ensure that each configured TCU is physically installed in its intended location.

Patent application US 2012/0159596 discloses a browser-based back-end management system for a concentrated photovoltaic (CPV) system where each of the CPV arrays at a solar site is coupled with a different system control point (SCP) to be communicatively connected to a central backend management system associated with that solar site. The management system is configured to present a plurality of user interfaces via the Internet to a browser of a user's client device to enable the user to view information for various components and send a command to perform an action for various components associated with the CPV arrays.

Patent application US 2014/136178 discloses systems and methods for model-based real-time solar power management where predicted data is generated based on a virtual model of the electrical system that replicates operation of the sensor(s). The virtual model is continuously and automatically synchronized with an electrical system based on a difference between the real-time data and the predicted data.

Patent specification KR 102524158 B1 discloses a server-based method for solar power plant management solutions where power generation loss is predicted.

It is significant to have reliable and efficient TCU identifier assignment, in particular given the typical number of TCUs (thousands) of modern PV power plants. Furthermore, it is significant that any TCU (e.g. from a batch of thousands) can be installed on any SAT without the need for the aforementioned manual TCU identifier assignment process. Additionally, it would be beneficial to have a capability to easily reconfigure the TCU identifiers of an entire PV site (or a part thereof), if needed/wished, or to easily replace or update individual TCUs.

The term "solar photovoltaic systems", or "solar PV systems", is used herein to refer to any system that converts sunlight into electricity using solar panels or collectors. "Solar collectors" typically refer to devices that capture solar thermal energy for heating purposes, while "solar panels" refer to devices that convert sunlight directly into electricity using photovoltaic cells. In general, usage, the term "solar PV systems" is commonly used to encompass both technologies. Similarly, the term "solar photovoltaic panel" or "solar PV panel" is used to refer to any of solar panels, solar collectors, or a combination of the two, such as a type of hybrid solar PV panel.

### Summary

It is an object to provide a method of assigning tracker control unit (TCU) identifiers alleviating one or more of the above-mentioned drawbacks at least to an extent.

An aspect of the invention is defined in claim 1.

Accordingly, in a first aspect, one or more of these objects is/are achieved at least to an extent by a method of assigning a tracker control unit (also equally referred to herein as tracking control unit) identifier to each of a (first) plurality of solar tracking control units, each solar tracking control unit associated with (the solar tracking control unit may e.g. be secured to or integrated with) a solar photovoltaic (PV) tracking structure. A solar tracking control unit will typically be present for each controllable/tiltable part of a solar photovoltaic (PV) tracking structure. In some embodiments, one solar photovoltaic (PV) tracking structure will comprise one solar tracking control unit. In other embodiments, one solar photovoltaic (PV) tracking structure may comprise a plurality of solar tracking control units, one solar tracking control unit may be used for a plurality of solar photovoltaic (PV) tracking structures (e.g. when a torque transfer drive or similar is used for a plurality of solar photovoltaic (PV) tracking structure), and so on. Each solar tracking control unit is further configured to control a tilt about one or more axes (or rather controlling the tilt of one or more PV panels of the solar photovoltaic (PV) tracking structure about one or more axes), and where the method comprises:
- providing a first data set to a network control unit, the network control unit configured to communicate with the (first) plurality of solar tracking control units, or at least a part thereof, in a communications network, the first data set comprising data representing a respective geographical location of a plurality of, e.g. each of, the (first) plurality of solar tracking control units (i.e. obtaining a respective geolocation of each solar tracking control unit to have a tracker control unit identifier assigned, where it does not necessarily need be all solar tracking control units of a power plant/site),
- obtaining, by the network control unit, a second data set comprising data representing a geographical location, from at least one, some, or all of the (first) plurality of solar tracking control units, and
- determining whether a geographical location of the second data set matches, e.g. within a certain threshold or tolerance, a geographical location of the first data set, and if matching, assigning a tracker control unit identifier to or for the solar tracking control unit that provided the matching geographical location of the second data set (or assigning a tracker control unit identifier to or for the solar tracking control unit that the matching geographical location of the second data set was otherwise provided for) to the network control unit.

In this way, a method of assigning a tracker control unit identifier to each of a (first) plurality of solar tracking control units is provided in an efficient way, as disclosed herein, even for a large number of TCUs. It also allows efficient reconfiguration of TCU identifiers of an entire PV site (or a part thereof) or to easily replace individual TCUs/TCU identifiers.

In some embodiments, the method further comprises
- obtaining the first data set comprising data representing a respective geographical location of a plurality of, e.g. each of, the (first) plurality of solar tracking control units (i.e. obtaining a respective geolocation of each solar tracking control unit to have a tracker control unit identifier assigned, which does not need be all solar tracking control units of a power plant/site) prior to providing the first data set to the network control unit.

In some embodiments, the method further comprises
- obtaining and assigning a respective tracker control unit identifier to each geographical location of the first data set (at least some of them), wherein the step of providing the first data set to a network control unit comprises
   ∘ providing the obtained data and the assigned tracker control unit identifiers to the network control unit (this may e.g. be done by appending identifiers to the first data or providing the first data and relevant identifiers to the network control unit), and
wherein the tracker control unit identifier assigned to or for the solar tracking control unit is selected from the assigned tracker control unit identifiers that has been provided to the network control unit.

In some embodiments, the step of obtaining a first data set comprises one or more of:
- obtaining respective geographical locations of the (first) plurality of solar tracking control units as part of or in connection with planning and designing a PV site layout comprising or to be comprising the solar tracking control units,
- communicating with a GPS receiver of the (first) plurality of solar tracking control units to obtain respective geographical locations of the (first) plurality of solar tracking control units,
- visiting (e.g. coming close to/be in vicinity of; e.g. by traversing (part of) a PV plant/site with the solar tracking control units), by a person, each (or at least one, some, or all of them) solar tracking control unit of the (first) plurality of solar tracking control units and obtaining a respective geographical location thereof, e.g. or preferably using a GPS receiver or similar, and
- obtaining a digital image of the (first) plurality of solar tracking control units, or of the solar photovoltaic (PV) tracking structure comprising the (first) plurality of solar tracking control units, and executing one or more software methods to derive data representing the respective geographical location of each, or at least one or some, of the (first) plurality of solar tracking control units.

In some embodiments, the step of obtaining, by the network control unit, the second data set comprises communicating with the one, some, or all of the (first) plurality of solar tracking control units according to a predetermined communications protocol.

In some embodiments, the predetermined communications protocol is a long-range low power or a low power wide area (LPWA) communications protocol.

In some embodiments, the predetermined communications protocol uses LoRa or alternatively is or uses M2M, WIFI, LoRaWAN, SigFox, BLE, NB-IOT, or ZigBee.

In some embodiments,
- the step of assigning a respective tracker control unit identifier to each geographical location of the first data set, or
- the step of assigning a tracker control unit identifier to or for the solar tracking control unit that provided the matching geographical location of the second data set,
assigns a tracker control unit identifier a predetermined ordering where
- the tracker control unit identifiers are assigned sequentially or incrementally,
- the tracker control unit identifiers are assigned so that physically neighbouring tracking control units, at least row- or column-wise, are assigned neighbouring valued tracker control unit identifiers,
- the tracker control unit identifiers are assigned non-sequentially, or
- the tracker control unit identifiers are assigned in an arbitrary manner.

In some embodiments, the tracker control unit identifiers are or comprises a numerical value, a textual descriptor or control unit identifier, and/or a combination thereof.

In some embodiments, the data a representing geographical location of a solar tracking control unit comprises data representing at least a latitude and longitude coordinate for the solar tracking control unit.

In some embodiments, the tracker control unit identifiers to be assigned are set by or in connection with a supervisory or control system such as a Supervisory Control and Data Acquisition (SCADA) system or similar.

In some embodiments,
- the step of obtaining the second data set,
- the step of determining whether a geographical location of the second data set matches a geographical location of the first data set, and
- the step of assigning a tracker control unit identifier to or for the solar tracking control unit that provided the matching geographical location of the second data set to the network control unit
are carried out firstly for solar tracking control units within a first predetermined acceptance criteria range and subsequently carried out for solar tracking control units within a second predetermined acceptance criteria range, where the second predetermined acceptance criteria range is larger than the first predetermined acceptance criteria range. In some further embodiments, this is repeated for a third predetermined acceptance criteria range and potentially additional ones.

The acceptance criteria range determines a difference or tolerance between a geographical location of the first data set and a geographical location of the second data set that is considered allowable or acceptable in order to still designate the two geographical locations (of the first and second data sets) to be matching for the purpose of assigning the tracking control unit identifier.

In some further embodiments, the steps are carried out additional times (one or more) with respective increasing acceptance criteria range, i.e. for a third predetermined acceptance criteria range, a fourth, etc.

Accordingly, the tracking control unit identifiers are assigned firstly for tracking control units that match their respective geographical locations within the strictest acceptance range (i.e. the first predetermined acceptance criteria) and when the tracking control unit identifiers for those tracking control units have been assigned (which typically will be the majority, e.g. about 80% though it may vary), the tracking control unit identifiers are assigned secondly for tracking control units that match their respective geographical locations within the second strictest acceptance range, etc. In this way, the tracker control unit identifier for tracking control units with least uncertainty with respect to their geographical location is assigned first (and is taken away from the pool of yet to be assigned identifiers), which makes it easier to determined tracker control unit identifier for tracking control unit with less certainty of the geographical locations as eventually it will be quite clear which tracking control unit is still outstanding and with a relatively high likelihood (after some iterations) they will not be neighbouring or closely situated tracking control units.

This is significant e.g. for densely packed (PV) panel power plants where the row distance (between neighbouring rows of (PV) tracking structures) may be about or approach twice the range of a typical uncertainty of a GPS sensor, where the uncertainly of the GPS sensor signal or similar almost equally could put a particular tracking control unit at one row or a neighbouring one.

In some embodiments, the first predetermined acceptance criteria range is about two metres, and the range is incremented by about 20 (e.g. between 15 - 30) centimetres for each increase of the acceptance criteria range (i.e. the second first predetermined acceptance criteria range is 2.20 metres, the third 2.40 and so on. But it is to be understood that the initial value and the incremental value may depend a lot on specifics such as the distance between two rows (which in some embodiments is about 5 metres).

In some embodiments, the obtained geographical location of the second data (i.e. the obtained geographical locations of the tracking control units) are respectively average over a time period to reduce the uncertainty of the respective sensors providing the respective geographical locations of the tracking control units.

In some embodiments, the respective solar tracking control units are secured to or integrated with a respective solar photovoltaic (PV) tracking structure.

According to a second aspect is provided a solar photovoltaic (PV) panel power plant comprising
- a plurality of solar photovoltaic (PV) tracking structures,
- a (first) plurality of solar tracking control units, each solar tracking control unit associated with (the solar tracking control unit may e.g. be secured to or integrated with) a solar photovoltaic (PV) tracking structure,
- a network control unit configured to establish a communications network with the (first) plurality of solar tracking control units (or at least some of them),
wherein the solar photovoltaic (PV) panel power plant is configured to execute the method of assigning tracker control unit identifiers according to the first aspect and embodiments thereof.

In some embodiments, the solar photovoltaic (PV) panel power plant
- each or at least some of the solar photovoltaic (PV) tracking structures comprises
   ∘ one or more solar PV panels,
   ∘ a secured or integrated, or otherwise associated, solar tracking control unit,
   ∘ a support structure assembly comprising one or more support structures,
      the support structure assembly being adapted to support the one or more solar PV panels on a surface and to tilt the one or more solar PV panels about one or more axes under control of the solar tracking control unit.

According to a third aspect is provided a network control unit of or for a solar photovoltaic (PV) panel power plant, the network control unit configured to establish a communications network with a (first) plurality of solar tracking control units, or at least a part thereof (at least some of them), wherein the network control unit is configured to execute the method of assigning tracker control unit identifiers according to the first aspect and embodiments thereof.

In some embodiments,
- each or at least some of the solar photovoltaic (PV) tracking structures comprises
   ∘ one or more solar PV panels,
   ∘ a secured or integrated, or otherwise associated, solar tracking control unit,
   ∘ a support structure assembly comprising one or more support structures,
      the support structure assembly being adapted to support the one or more solar PV panels on a surface and to tilt the one or more solar PV panels about one or more axes under control of the solar tracking control unit.

### Definitions

All headings and sub-headings are used herein for convenience only and should not be constructed as limiting the invention in any way.

The use of any and all examples, or exemplary language provided herein, is intended merely to better illuminate the invention and does not pose a limitation on the scope of the invention unless otherwise claimed. No language in the specification should be construed as indicating any non-claimed element as essential to the practice of the invention.

This invention includes all modifications and equivalents of the subject matter recited in the claims appended hereto as permitted by applicable law.

### Brief description of the drawings

Figures 1A and 1B schematically illustrate a side and front view, respectively, of an example of a solar photovoltaic (PV) tracking structure comprising an array of solar PV panels;
Figure 2 schematically illustrates a more detailed view of an example of a SAT solar PV tracking structure;
Figure 3 schematically illustrates a PV power plant comprising an NCU and a plurality of TCUs organised in an exemplary network;
Figure 4 schematically illustrates a flow-chart of a TCU identifier assignment method according to an exemplary embodiment of an aspect as disclosed herein; and
Figures 5a - 5c schematically illustrate various visualisations of geographical locations for a plurality of TCUs (Figure 5a) and furthermore (Figures 5b and 5c) assigned ID numbers of the TCUs.

### Detailed description

Various aspects and embodiments of a method of assigning tracker identifiers for or to a number of solar tracking control units (TCUs) and a solar photovoltaic (PV) panel power plant and a network control unit (NCU) using such method as disclosed herein will now be described with reference to the figures.

When/if relative expressions such as "upper" and "lower", "right" and "left", "horizontal" and "vertical", "clockwise" and "counter clockwise" or similar are used in the following terms, these typically refer to the appended figures and not necessarily to an actual situation of use. The shown figures are schematic representations for which reason the configuration of the different structures as well as their relative dimensions are intended to serve illustrative purposes.

Some components may only be disclosed in relation to a single embodiment of the invention, but may be meant to be included in the other embodiments without further explanation.

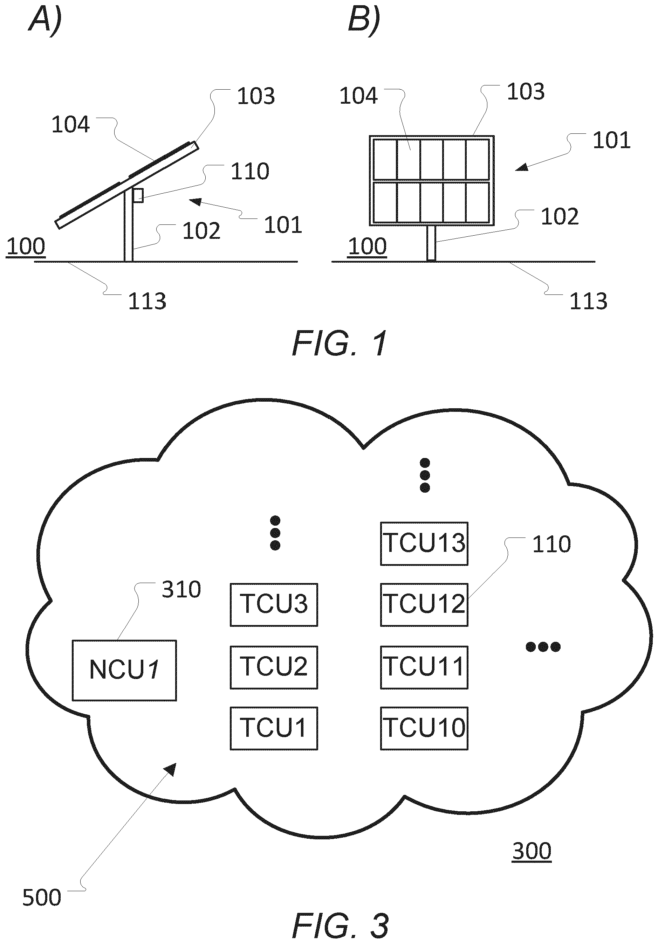

Figures 1A and 1B schematically illustrate a side and front view, respectively, of an example of a solar photovoltaic (PV) tracking structure comprising an array of solar PV panels.

Illustrated is a solar photovoltaic (PV) tracking structure 100 as generally known comprising a number, sometimes quite large number, of separate solar PV panels 104 arranged in a suitable array, grid, layout, etc. in a solar PV panel module as generally known. In the illustrated example, the solar PV panels 104 are arranged, as an example, in a so-called 2-portrait (2P) arrangement, where two rows of solar PV panels are arranged in portrait orientation in each row. It is to be understood that the solar PV panels 104 may be arranged in any suitable arrangement.

The solar PV panels 104 are supported by a support structure assembly 101 comprising, as an example, a first support structure 102 and a second support structure 103. The support structure assembly supports the solar PV panels 104 on a surface 113 such as the ground. The first support structure 102 supports the second support structure 103, which supports the solar PV panels 104. The first support structure 102 is typically secured in or on the surface 113. The second support part 103 may e.g. be a frame or the like having a particular inclination optimising the received solar energy.

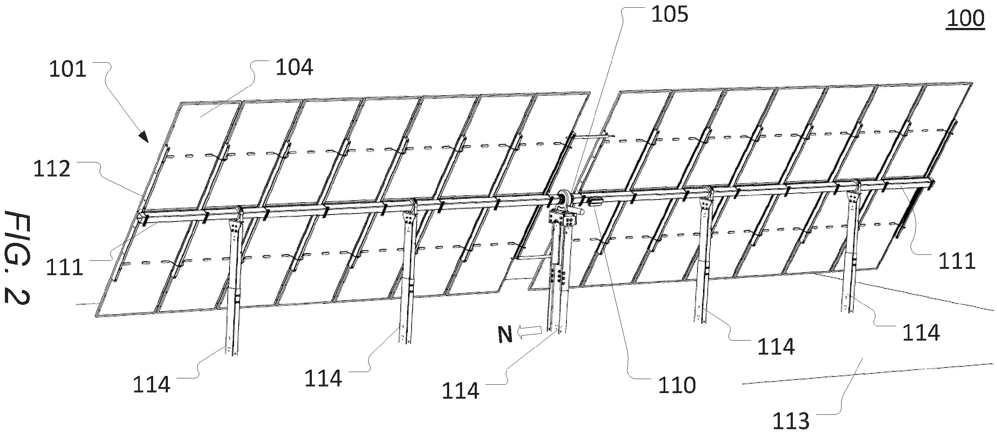

Preferably, the support structure assembly may comprise or be coupled to a solar tracking control unit (TCU) 110 configured to control the orientation of the one or more solar PV panels to be towards the sun as generally known. An illustration of a more detailed exemplary embodiment of a solar PV tracking structure (in the form of a SAT solar PV tracking structure) is illustrated in Figure 2.

Figure 2 schematically illustrates a more detailed view of an example of a SAT solar PV tracking structure.

The solar PV tracking structure shown in Fig. 2 comprises a support structure assembly 101, which supports, as an example, two modules of solar PV panels, each module comprising, as an example, two-by-seven solar PV panels 104. It is to be understood that the number may vary and/or that the layout may be different. For example, the support structure assembly 101 may comprise a number, e.g. four, of horizontally mounted panels or it could be in any other suitable or preferred configuration as generally known. The support structure assembly 101 comprises a first support structure comprising, as an example, five piles 114, which have been secured in a suitable way to/in the surface 113 on which the solar PV tracking structure 100 is constructed or installed. The five piles 114 are, as an example, aligned on a substantially north-south line. Alternatively, the piles 114 are, as another example, aligned on a substantially east-west line or according to any other suitable line. A second support structure is supported at least in part by the first support structure 114 and comprises two torque tubes 111 and a plurality of transverse beams 112. The torque tubes 111 are coupled to a torque transfer drive 105, which is supported by the central pile 114. Each torque tube 111 is in this particular embodiment coupled to two of the other piles 114 via a bearing or similar that allows rotation of the torque tube about a torque tube axis. The transverse beams 112 are coupled to the torque tube 111 and extend away from the torque tube 110 in, as an example, a general east-west orientation and substantially orthogonally thereto (i.e. in relation to the torque tube 111). Twenty-eight, as an example, solar PV panels 104 are coupled to the second support structure such that rotation of the torque tube 111 rotates the respective solar PV panels 104. The construction is adapted such that moment on the solar PV panels, e.g. from wind load, will be transferred to the central pile 114, which therefore, as an example, has larger dimensions than the other piles 114. The solar PV tracking structure 100 comprises a tracker control unit (TCU) 110 secured in the illustrated embodiment to one of the torque tubes 111. The tracker control unit 110 controls the rotation of the torque tube, and thereby the rotation of the solar PV panels, as generally known. Even though the illustrated solar PV tracking structure 100 comprises two torque tubes 111, it comprises only a single TCU 110 since the two torque tubes 111 are designed to move/rotate together (and with the same orientation of the panels 104).

The illustrated solar PV tracking structure 100 is, as an example, a single-axis 2P solar tracker as the solar PV panels 104 are arranged in a so-called 2-portrait (2P) arrangement, where two rows of solar PV panels are arranged in portrait orientation in each row.

Figure 3 schematically illustrates a PV power plant comprising an NCU and a plurality of TCUs organised in an exemplary network.

Schematically illustrated is a PV power plant 500 comprising at least one network control unit (NCU) 310 and a plurality of tracker control units (TCUs) 110, both as disclosed herein and as generally known, organised in a network 300.

As mentioned, a PV power plant may e.g. comprise about 3000 TCUs and a suitable number of NCUs (one or more). An NCU may e.g. be connected and controlling to up to as much as 1000 TCUs. In other embodiments, the number of TCUs may be less than about 3000 or may be more than about 3000 units with a necessary or suitable number of NCUs.

It is advantageous to have NCUs, as this allows the TCUs have simpler functionality themselves thereby reducing complexity for the TCUs and saving overall costs. For example, it is not necessary (or potentially even beneficial) that the TCUs on their own are able to communication for example via the Internet with a central system. Furthermore, some local autonomy is possible by having a more capable NCU communicating with (and controlling) a number of TCUs e.g. if Internet access or similar is disrupted. As an example of local autonomy are e.g. NCUs comprising or being connected with a wind sensor or the like that can communicate with the TCUs to tilt to a safe position in case large wind forces are detected where this can be done without the involvement of a central system.

A TCU will typically be present for each controllable part of a solar photovoltaic (PV) tracking structure. In some embodiments, one solar photovoltaic (PV) tracking structure will comprise one TCU. In other embodiments, one solar photovoltaic (PV) tracking structure may comprise a plurality of TCUs, one TCU may be used for a plurality of solar photovoltaic (PV) tracking structures (e.g. when a torque transfer drive - see e.g. 105 in Figure 2 - is used for a plurality of SAT tracking structures), and so on. For example, the solar photovoltaic (PV) tracking structure illustrated in Figure 2 comprises one TCU.

In the illustrated exemplary embodiment, the TCUs (or rather the solar photovoltaic (PV) tracking structures comprising the TCUs) are arranged in a number of different rows where the rows may comprise the same or a different number of TCUs. The arrangement, the number of rows, and the number of TCUs of each row will typically depend on the layout of the site of the PV power plant (and e.g. other factors).

Typically, each TCU will comprise (or otherwise be associated with) data representing a serial number, device ID, or the like and e.g. further information/data. This data is typically 'factory' data, settings, information, etc.

When managing power plants comprising a number, and especially a large number, of TCUs, it is often preferred or beneficial to use a TCU identifier (different to device ID, serial number, etc.) for each TCU that describes the TCU's relative position within the site or at least uniquely (within a given context) identifies the respective TCU. Such an identifier allows engineers and technicians communicate maintenance related issues and efficiently locate TCUs during site visits. Furthermore, the parties commissioning PV sites are often not the same as those constructing the site. In such cases, each party may have their own naming convention for TCUs and other PV equipment in the PV site. A fast and simple method for TCU identification would eliminate overlapping efforts and possible confusion for PV asset managers. And in particular if managing several such power plants. When a TCU is to be assigned a TCU identifier it typically involves on-site manually uploading configuration data to each TCU via its USB port or similar.

Accordingly, it would be beneficial to have a more efficient way of assigning a TCU identifier, such as a TCU ID number or similar, to each TCU. In particular in an automated or semi-automated manner. The NCU should preferably also 'know' the TCU identifiers for all TCU connected to it or that the NCU controls and know what particular TCU identifier belongs to which TCU. Additionally, it would be beneficial to have a capability to easily reconfigure the TCU identifiers of an entire PV site (or a part thereof), if needed/wished, or to easily replace individual TCUs. Such automatic or semi-automatic TCU identifier setting/configuration makes it simpler and more efficient, e.g. for SCADA programmers, to set the TCU aliases (ie character/reference names) which operation and maintenance teams use to perform regular tasks. Additionally, it is also advantageous to be able to install any TCU (e.g. from a batch of thousands) on any SAT without a need for any a priori TCU identifier assignment.

For example, if a particular solar photovoltaic (PV) tracking structure is scheduled for or requires maintenance, it is simpler to refer to it by its TCU identifier (or its alias, e.g. SCADA alias) than a very long serial number of similar, also in automated or semi-automated procedures.

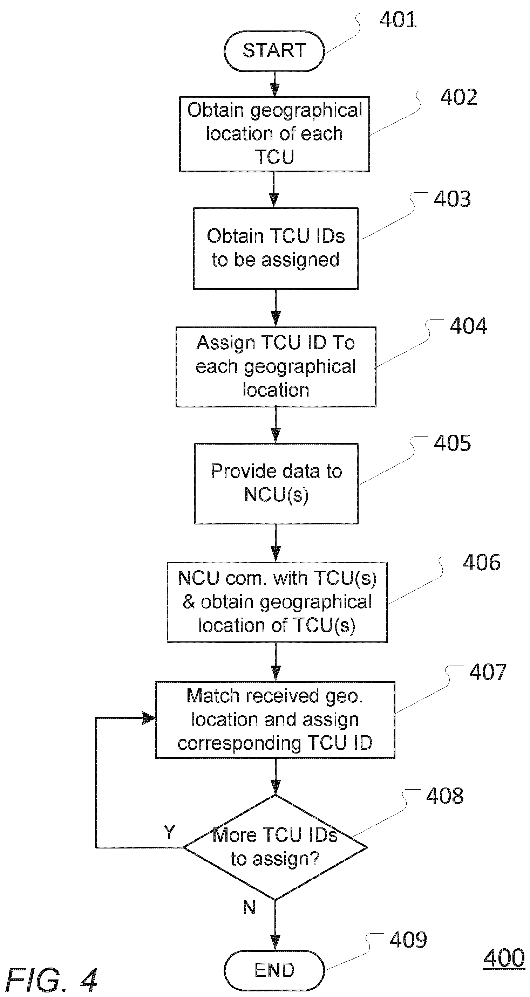

Figure 4 illustrates an exemplary embodiment of a method of assigning TCU identifiers, and in particular assigning TCU ID numbers, to a (typically large) number of TCUs, without requiring on-site manual access/upload to each TCU according to the present invention.

Figure 4 schematically illustrates a flow-chart of a TCU identifier assignment method according to an exemplary embodiment of an aspect as disclosed herein.

Illustrated is a method of assigning TCU identifiers (also equally referred to herein as tracker controller identifiers), such as TCU ID numbers or other e.g. as disclosed herein, to a number of TCUs.

The method initialises at step 401.

At step 402, data representing a geographical location is obtained or provided for each TCU (see e.g. 110 in Figures 1 - 3) to have a TCU identifier assigned for or to (which may be fewer than the TCUs of an overall PV power plant). The obtained data (for all relevant TCUs) may be regarded or seen as a data set referred to herein as a first data set. In some embodiments, the geographical location for a particular TCU comprises data representing latitude and longitude coordinates for the respective TCU. Alternatively, the geographical location comprises different data as long as the geographical location unambiguously can be derived.

In some embodiments, the respective latitude and longitude coordinates for the geographical locations are obtained using a GPS receiver or similar.

In some additional or alternative embodiments, the respective geographical locations are obtained as part of or in connection with planning and designing the PV site layout (determining locations of the solar photovoltaic tracking structures, the TCU's, the NCU(s), etc.) and e.g. a geographic information system (GIS) or similar.

In some further additional or alternative embodiments, the respective geographical locations are obtained as part of or in connection with an installation procedure of solar photovoltaic (PV) tracking structures (i.e. or e.g. when or after the TCUs are installed or at least are energised).

In some further additional or alternative embodiments, the respective geographical locations, i.e. or e.g. the respective latitude and longitude coordinates, are obtained as follows. Before, during, or after installation of the solar photovoltaic (PV) tracking structures, the TCUs to be connected to a single NCU in a network (see e.g. 300 in Figure 3) are secured to their respective solar photovoltaic (PV) tracking structures and preferably once the TCUs (of an NCU) are mounted (so it is certain their location does not change and/or it is certain they are fixed in relation to a particular respective solar photovoltaic (PV) tracking structure) and e.g. or preferably is energised, an engineer, technician, or similar obtains respective geographical locations, i.e. or e.g. the respective latitude and longitude coordinates, of each TCU (of an NCU).

This may e.g. be done simply by the technician traversing the site and recording or obtaining GPS data (at least the respective latitude and longitude coordinates) of each TCU e.g. using a GPS receiver or similar. It is noted, that this does not require any communication with the TCUs and does not entail or require the logging of any other data or information from or about the TCUs (such as serial number, ID, etc.), which greatly simplifies this part of the procedure.

It is further noted that (at least in some embodiments) the geographical locations of the TCUs can be obtained in any order (regardless e.g. of the value of the respective TCU identifiers, which may not even be known or determined yet), which is an advantage. For example, if obtaining by traversing the site, the technician can traverse the TCUs in the most optimal way, e.g. optimising for shortest distance or shortest traversal time. A reason for this, is that the assignment (see e.g. step 407 in the following) does not require any particular assignment order or order of geographical locations, as will be explained or be apparent later.

As yet another alternative (where each TCU comprises a GPS unit and it is used for this purpose), a technician or similar may simply obtain the GPS data (at least the respective latitude and longitude coordinates) of each TCU by connecting to each TCU.

In further additional or alternative embodiments, the geographical locations or the latitude and longitude coordinates of the TCUs are obtained by analysing, e.g. using automated or semi-automated image recognition software, image data of an aerial image or other/similar comprising the solar photovoltaic (PV) tracking structures in question.

Alternatively, the geographical locations of the TCUs are provided in another suitable way.

As disclosed herein, there are many ways of (and possible timings for) obtaining the (end) geographical location of each TCU and it is less significant for the present invention (while different ways and/or timings may have their respective pros and cons) how it is done but rather that it is done for subsequent use as described in the following.

Even though the above describes that only the geographical locations of TCUs of one NCU is obtained, it is to be understood that the geographical locations of TCUs of more NCUs can be obtained in a similar way. A way of registering/tracking which TCU (and thereby their geographical locations) belong to which NCU may then be needed, e.g. as an example - one group of TCUs/geographical locations belong to NCUx, another group of TCUs/geographical locations belong to NCUy, etc. or registering a relevant NCU identifier with each geographical location, or any other suitable way.

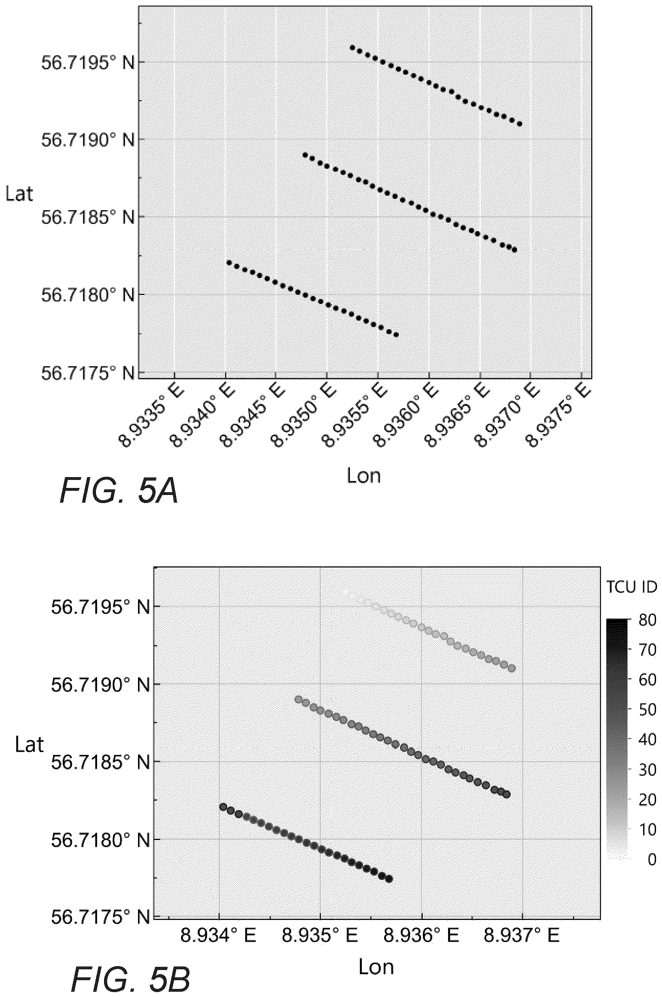

A visualisation of such obtained data representing geographical locations (here as an example in the form of pairs of latitude and longitude coordinates) for a number (here 75 as an example) of TCUs are illustrated in Figure 5a with a dot for each latitude (y-axis) and longitude (x-axis) pair. In this visualisation, no TCU identifier has been assigned yet.

At step 403, the TCU identifiers (or rather data representing the TCU identifiers) to be assigned to the TCUs in questions are obtained or provided. What the TCU identifier are or may be may depend on actual use or context and may both be simple or more elaborate.

A simple example may e.g. be that the TCU identifiers are an ordered integer range such as very simply '1', `2', `3', etc. The TCU identifiers may e.g. also be a descriptor and a value range such as simply TCU1, TCU2, TCU3, etc. and/or e.g. include a site or power plant identifier, a transformer/group identifier, such as SiteC_TCU1, SiteC_TCU2, etc., NCU1_TCU1, NCU1_TCU2, NCU1_TCU3, etc., and so on.

The non-numeric identifiers may e.g. be referred to as aliases and e.g. be set by or in connection with a supervisory or control system such as a Supervisory Control and Data Acquisition (SCADA) system or similar. Even if 'only' using TCU identifiers in the form of integers, a well-structured TCU identifier numbering convention based on geolocation may simplify a subsequent SCADA programming process or similar.

It is not a requirement that the numbering are ordered or similar. What is significant, is that a TCU identifier is unique (at least within the given context) so that it can be used to identify a particular TCU in question without doubt.

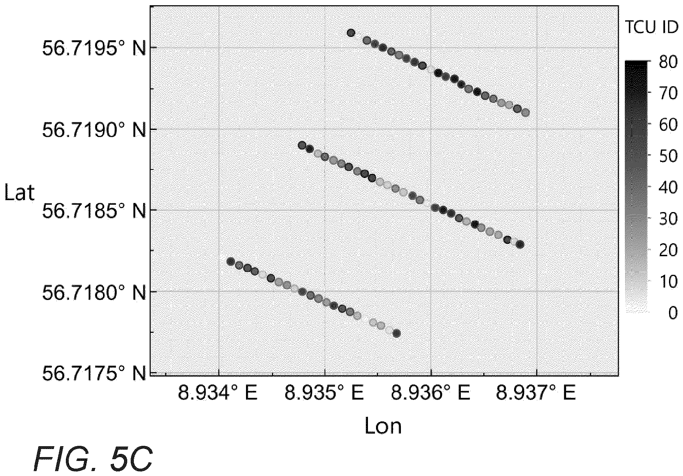

At step 404, each geographical location is assigned, paired, or otherwise associated with a TCU identifier. Depending on use or context, this assignment may be done in any suitable way. As such and by itself, it is not necessary (at least in some uses or contexts) that the assignment is done in a particular way. As an example, the TCU identifiers may be assigned sequentially and in order (as e.g. Figure 5b illustrates) (which may then assign the TCU identifiers in the order the geographical location data has been obtained, when obtained by an engineer, technician, or similar traversing the site) or it may even be random, more arbitrary (as e.g. Figure 5c illustrates). It can also be assigned according to any other useful scheme, even having advantages for certain uses or contexts.

The data representing a TCU identifier may e.g. be assigned, etc. by appending the first data set (comprising the data representing a geographical location for each relevant TCU as obtained at step 402) with the data representing a TCU identifiers or alternatively, the data representing a TCU identifier may be separate from the first data set and being appropriately linked or otherwise associated with the data of the first data set, e.g. each TCU identifier being linked with an appropriate data entry of the first data set representing a geographical location.

A result of step 404 may e.g. be a data structure e.g. according to (if latitude and longitude is used as a data representation for the respective geographical locations) { [TCU ID#x], [Lat_val_TCUy], [Long_val_TCUy] }, where x denotes a value or index (between 1 and x for a group of x TCUs) of the TCU identifiers and y denotes a value or index (between 1 and y for a group of y geographical locations) of the geographical locations or a corresponding data structure. Typically, x and y will be equal or at least x should be equal or greater than y. In this example, data representing the TCU identifiers are appended or added to the first data set.

As a more detailed simple example, the resultant data structure may e.g. be
{ ["1"], [56.719], [8.9352];
["2"], [56.719], [8.9353];
["3"], [56.719], [8.9354];
etc. }.

The resolution of the latitude and longitude values may be higher than written above.

It is to be understood that steps 403 and 404 readily may be combined into a single step. In some embodiments, steps 402 - 404 are combined into a single step e.g. as part of designing or planning the PV site layout, traversing the TCUs and providing and assigning a TCU identifier as the TCUs are being traversed, etc.

At step 405, the resultant data (i.e. the first data set including the assigned TCU identifiers in some appropriate form) of step 404 is provided to or obtained by an NCU (associated with the TCUs that the geographical locations have been obtained for at step 402; i.e. each TCU that the NCU in question is to be connected with in a suitable network).

Even with (some) networking capabilities it is still not unusual that uploading data, settings, etc. to an NCU requires on-site connection, typically via a USB connection or similar. The same is the case with TCUs (i.e. requiring on-site connection via USB or similar) and given a typical number of TCUs present for a typically scaled power plant (e.g. up to 1000 TCU for each NCU; about 3000 TCUs for a 50 MWp PV power plant, etc.) it would be very time consuming to on-site manually connect with each TCU.

TCUs/NCUs may have enhanced or expanded communications capabilities but that adds to the complexity, costs, and power usage of the TCUs/NCus and thereby the PV power plant.

After the data has been provided to the NCU, the NCU (at step 406) communicates with at least one TCU (in communication range) according to a predetermined communications protocol. In some embodiments, the predetermined communications protocol advantageously uses the so-called "LoRa" communications technique readily enabling long-range (ultra) low power communications. LoRa typically involves a non-cellular LPWA (low power wide area) network enabling communication of data using different frequency channels, data rates, and packet encoding. In at least some embodiments (and preferably), the NCU will communicate with a number of TCUs. The NCU may for example broadcast a discovery or "who-is-around" message or transmission that TCUs (within range) will respond to.

Alternatively, the predetermined communications protocol may be/use one of M2M, WIFI, LoRaWAN, SigFox, BLE, NB-IOT, ZigBee, etc. instead of LoRa.

As part of this communication, the TCU(s) will return data representing its/their respective geographical location(s), e.g. or preferably in the form of latitude and longitude data pairs. The geographical location of a TCU may e.g. be obtained by an internal or connected GPS receiver or similar of the TCU or in some other suitable way e.g. other ways of geolocation e.g. using satellite networks or other. The returned data may e.g. include further data or information such as serial number, etc. or other useful data/information of the respective TCU (e.g. current settings or a digest thereof such as CRC, etc.) for potential other use by the NCU. The returned data (for all relevant TCUs) may be regarded or seen as a data set referred to herein as a second data set.

As a simple example, the data provided by a TCU in response to a broadcast message or other from the NCU may e.g. be or comprise { "DEVICE_ID"; "SER.NO"; "GEO. LOCATION"}, i.e. a device id (being different from a TCU identifier) of the responding or transmitting TCU, a serial number of the TCU, and data representing the geographical location (e.g. in the form of a latitude and longitude data pair or other) of the TCU. As mentioned, the geographical location may e.g. be provided by a GPS receiver or similar of the TCU.

At step 407, the NCU will for each received geographical location (e.g. for each latitude and longitude data pair) (as received in the transmission or response from a TCU) then match against, e.g. within a certain threshold or tolerance, stored geographical location data (as provided at step 405). In other words, the NCU determines whether a geographical location of the second data set matches, e.g. within a certain threshold or tolerance, a geographical location of the first data set. When a match (e.g. within certain tolerances) is determined, the NCU will assign the TCU identifier, assigned (at step 404) to the geographical location data (of the data stored in the NCU), to or for the TCU that returned the geographical location matching the geographical location data in the NCU.

As a simple example (continuing the example above), the NCU receives as part of step 406 data representing a geographical location of a particular TCU being [56.719], [8.9354] (which is or may be obtained by a GPC of the given TCU), which the NCU matches against stored records. Once the matching record - ["3"], [56.719], [8.9354] - is found, the associated TCU identifier "3" is assigned to the particular TCU.

At step 408, it is checked whether there are more TCU identifiers to assign. In case of `yes', the method loops back to step 407 where another match is looked for (resulting in another TCU identifier assignment in case of a match). In case of 'no', the method proceeds to step 409 ending the method.

If step 406 only receives data (representing a geographical location) of one TCU at a time, step 408 would loop back to step 406 instead of step 407.

Steps 406 and 407 could alternatively be without any loop, if for example step 406 communicates and receives the geographical location of all (relevant) TCUs.

The method may also support assigning TCU identifiers for TCU of a plurality of NCUs (rather than a single one). In such cases, steps 402 - 408 would for example loop for each NCU.

The precision of the obtained geographical location as obtained by step 402 and/or the precision of the obtained geographical location as obtained by step 406 in combination with how close/densely the solar photovoltaic (PV) tracking structures - and thereby the respective TCUs of the solar photovoltaic (PV) tracking structures - are arranged may have some bearing or impact on the TCU assignment process. For example, sufficiently closely located TCUs - for a particular precision of the obtained geographical locations (as obtained by step 402 and/or by step 406, respectively) - may cause difficulty in determining whether a particular TCU identifier is to be assigned to one or another (closely arranged) TCU (e.g. being located in neighbouring rows) To address this (in relevant situations), the method of assigning TCU identifiers as illustrated in Fig. 4 (and corresponding embodiments thereof) is, at least in some embodiments, modified to assign identifiers for TCU(s) with geographical locations that match within a first predetermined acceptance criteria range (assigning TCU identifiers to TCUs that matches as described) and then increasing the acceptance criteria range (to a second predetermined range) and then match geographical locations of the TCU(s) within the second predetermined acceptance criteria range that were not included in the assignments of the first predetermined acceptance criteria range. This can be repeated a suitable number of times (e.g. with a third predetermined acceptance criteria range being larger than the second predetermined acceptance criteria range, a fourth predetermined acceptance criteria range being larger than the third acceptance criteria predetermined range, etc.) until all or most of the relevant TCU identifiers have been properly assigned where eventually it will be clear or at least less ambiguous which of the remaining TCU identifiers should be assigned to which remaining TCUs (as TCU identifiers ongoingly are assigned taking them 'out of the pool' of subsequent consideration. The range may be expanded e.g. in increments depending on the specific use scenario. In some embodiments (e.g. for neighbouring rows having a distance of about 5 metres or so), the first predetermined acceptance criteria range is about 2 metres and each increment (second predetermined acceptance criteria range, third, etc.) increases the range with (depending on use scenario) e.g. about 20 centimetres for each increment/iteration.

Such an embodiments, may e.g. be implemented by letting step 407 firstly assign TCU identifies for TCUs that match their geographical location within the first predetermined acceptance criteria range, and then increase acceptance range for each loop back to step 407 from step 408, i.e. match for TCUs according the second predetermined acceptance criteria range, the third predetermined acceptance criteria range, and so on with each loop back.

Figures 5a - 5c schematically illustrate various visualisations of geographical locations for a plurality of TCUs (Figure 5a) and furthermore (Figures 5b and 5c) assigned ID numbers of the TCUs.

Figure 5a schematically illustrates an exemplary visualisation of geographical locations for a plurality (here 75 as an example) of TCUs. It can be seen that in this example, the TCUs are arranged in three rows of 23, 29, and 23 TCUs, respectively. The x-axis is longitude and the y-axis is latitude. As disclosed herein, the geographical locations of each TCU may e.g. be obtained by a technician or similar traversing the site with the TCUs (or more precisely with the solar PV tracking structures comprising the TCUs).

Figure 5b schematically illustrates an exemplary visualisation of geographical locations for the same TCUs as in Figure 5a but where the TCU identifiers has been assigned. In this example, the TCU identifiers are simple numbers ranging from 0 to 80 (where 75 numbers have been assigned) and the TCU identifier or TCU numbers is visualised by its colour according to the illustrated colour scale.

The TCU identifiers are preferably assigned as disclosed herein and in particular as explained in connection with Figure 4.

As indicated, the TCU identifiers have been assigned in an ordered way and more particularly by sequential values (based on vicinity of the TCUs). In the example, the TCUs of the upper row are numbered with TCU numbers 1 - 23, the TCUs of the middle row is numbered 24 - 52, and the TCUs of the lower row is numbered 53 - 75, i.e. a row wise sequential ordering with a starting point and where a subsequent adjacent row continues from where a previous row ended.

The sequential ordering may e.g. be done by traversing the TCUs sequentially and assigning TCU numbers/identifiers incrementally as the TCUs are traversed (may e.g. be done as part of steps 402 - 404 of Figure 4).

Even though not necessary, there are or may be advantages for such an ordered and/or sequential ordering. For example, it will be easier for a technician or similar to know (at least the vicinity) of neighbouring TCUs or TCUs close by, which may be beneficial e.g. if the technician is to perform maintenance or service on certain TCUs.

The TCU identifiers may also include additional info such as a row number indicator. For example, the TCUs of the upper row could have TCU identifiers like row1_1; row1_2; etc. assigned. The middle row could then e.g. have TCU identifiers like row2_1; row2_2; etc. (or continuing the numbers row2_24; row2_24; etc.).

Figure 5c schematically illustrates an exemplary visualisation of geographical locations for the same TCUs as in Figures 5a and 5b and where the TCU identifiers has been assigned just according to a different scheme than in Figure 5c. In this example, the TCU identifiers are (like in Figure 5b) simple numbers ranging from 0 to 80 (where 75 numbers have been assigned) but the TCU identifiers have been assigned arbitrarily (as an example).

The TCU identifiers are preferably assigned as disclosed herein and in particular as explained in connection with Figure 4.

In the claims enumerating several features, some or all of these features may be embodied by one and the same element, component or item. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, elements, steps or components but does not preclude the presence or addition of one or more other features, elements, steps, components or groups thereof.

## Claims

1. A method of assigning a tracker control unit identifier to each of a plurality of solar tracking control units (TCU; 110), each solar tracking control unit (TCU; 110) associated with a solar photovoltaic (PV) tracking structure (100) and configured to control a tilt about one or more axes, the method comprising:
- providing (405) a first data set to a network control unit (NCU; 310), the network control unit (NCU; 310) configured to communicate with the plurality of solar tracking control units (TCU; 110), or at least a part thereof, in a communications network (300), the first data set comprising data representing a respective geographical location of a plurality of, e.g. each of, the plurality of solar tracking control units (TCU; 110),
- obtaining (406), by the network control unit (NCU; 310), a second data set comprising data representing a geographical location, from at least one, some, or all of the plurality of solar tracking control units (TCU; 110), and
- determining (407) whether a geographical location of the second data set matches, e.g. within a certain threshold or tolerance, a geographical location of the first data set, and if matching, assigning (407) a tracker control unit identifier to or for the solar tracking control unit (TCU; 110) that provided the matching geographical location of the second data set to the network control unit (NCU; 310).

2. The method according to claim 1, wherein the method further comprises
- obtaining (402) the first data set comprising data representing a respective geographical location of a plurality of, e.g. each of, the plurality of solar tracking control units (TCU; 110) prior to providing (405) the first data set to the network control unit (NCU; 310).

3. The method according to claim 1 or 2, wherein the method further comprises
- obtaining (403) and assigning (404) a respective tracker control unit identifier to each geographical location of the first data set, wherein the step of providing (405) the first data set to a network control unit (NCU; 310) comprises
∘ providing the obtained data and the assigned tracker control unit identifiers to the network control unit (NCU; 310), and
wherein the tracker control unit identifier assigned to or for the solar tracking control unit (TCU; 110) is selected from the assigned tracker control unit identifiers that has been provided to the network control unit (NCU; 310).

4. The method according to any one of claims 1 - 3, wherein the step of obtaining (402) a first data set comprises one or more of:
- obtaining respective geographical locations of the plurality of solar tracking control units (TCU; 110) as part of or in connection with planning and designing a PV site layout comprising or to be comprising the solar tracking control units (TCU; 110),
- communicating with a GPS receiver of the plurality of solar tracking control units (TCU; 110) to obtain respective geographical locations of the plurality of solar tracking control units (TCU; 110),
- visiting, by a person, each solar tracking control unit (TCU; 110) of the plurality of solar tracking control units (TCU; 110) and obtaining a respective geographical location thereof, e.g. or preferably using a GPS receiver or similar, and
- obtaining a digital image of the plurality of solar tracking control units (TCU; 110), or of the solar photovoltaic (PV) tracking structure (100) comprising the plurality of solar tracking control units (TCU; 110), and executing one or more software methods to derive data representing the respective geographical location of each, or at least one or some, of the plurality of solar tracking control units (TCU; 110).

5. The method according to any one of claims 1 - 4, wherein the step of obtaining (406), by the network control unit (NCU; 310), the second data set comprises communicating with the one, some, or all of the plurality of solar tracking control units (TCU; 110) according to a predetermined communications protocol, wherein the predetermined communications protocol is a long-range low power or a low power wide area (LPWA) communications protocol and/or the predetermined communications protocol uses LoRa or alternatively is or uses M2M, WIFI, LoRaWAN, SigFox, BLE, NB-IOT, or ZigBee.

6. The method according to any one of claims 1 - 5, wherein
- the step of assigning (404) a respective tracker control unit identifier to each geographical location of the first data set, or
- the step of assigning (407) a tracker control unit identifier to or for the solar tracking control unit (TCU; 110) that provided the matching geographical location of the second data set,
assigns a tracker control unit identifier a predetermined ordering where
- the tracker control unit identifiers are assigned sequentially or incrementally,
- the tracker control unit identifiers are assigned so that physically neighbouring tracking control units (TCU; 110), at least row- or column-wise, are assigned neighbouring valued tracker control unit identifiers,
- the tracker control unit identifiers are assigned non-sequentially, or
- the tracker control unit identifiers are assigned in an arbitrary manner.

7. The method according to any one of claims 1 - 6, wherein the tracker control unit identifiers are or comprises a numerical value, a textual descriptor or control unit identifier, and/or a combination thereof.

8. The method according to any one of claims 1 - 7, wherein the data a representing geographical location of a solar tracking control unit (TCU; 110) comprises data representing at least a latitude and longitude coordinate for the solar tracking control unit (TCU; 110).

9. The method according to any one of claims 1 - 8, wherein the tracker control unit identifiers to be assigned are set by or in connection with a supervisory or control system such as a Supervisory Control and Data Acquisition (SCADA) system or similar.

10. The method according to any one of claims 1 - 9, wherein
- the step of obtaining (406) the second data set,
- the step of determining (407) whether a geographical location of the second data set matches a geographical location of the first data set, and
- the step of assigning (407) a tracker control unit identifier to or for the solar tracking control unit (TCU; 110) that provided the matching geographical location of the second data set to the network control unit (NCU; 310)
are carried out firstly for solar tracking control units (TCU; 110) within a first predetermined acceptance criteria range and subsequently carried out for solar tracking control units (TCU; 110) within a second predetermined acceptance criteria range, where the second predetermined acceptance criteria range is larger than the first predetermined acceptance criteria range.

11. A solar photovoltaic (PV) panel power plant (500) comprising
- a plurality of solar photovoltaic (PV) tracking structures (100),
- a plurality of solar tracking control units (TCU; 110), each solar tracking control unit (TCU; 110) associated with a solar photovoltaic (PV) tracking structure (100),
- a network control unit (NCU; 310) configured to establish a communications network (300) with the plurality of solar tracking control units (TCU; 110),
wherein the solar photovoltaic (PV) panel power plant (500) is configured to execute a method of assigning tracker control unit identifiers according to any one of claims 1-10.

12. A network control unit (NCU; 310) of or for a solar photovoltaic (PV) panel power plant (500), the network control unit (NCU; 310) configured to establish a communications network (300) with a plurality of solar tracking control units (TCU; 110), or at least a part thereof, wherein the network control unit (NCU; 310) is configured to execute a method of assigning tracker control unit identifiers according to any one of claims 1-10.

13. The method according to any one of claims 1 - 10, the solar photovoltaic (PV) panel power plant (500) according to claim 11, and/or the network control unit (NCU; 310) according to claim 12, wherein
- each or at least some of the solar photovoltaic (PV) tracking structures (100) comprises
∘ one or more solar PV panels (104),
∘ a secured or integrated, or otherwise associated, solar tracking control unit (TCU; 110),
∘ a support structure assembly (101) comprising one or more support structures (102, 103, 114),
the support structure assembly being adapted to support the one or more solar PV panels on a surface (113) and to tilt the one or more solar PV panels about one or more axes under control of the solar tracking control unit (TCU; 110).
